Europäisches Patentamt

European Patent Office

Office européen des brevets

(19)

(11) Veröffentlichungsnummer: **0 422 259 B1**

## EUROPÄISCHE PATENTSCHRIFT

(12)

(45) Veröffentlichungstag der Patentschrift: **20.04.94**

(51) Int. Cl.⁵: **G01D 5/34**

(21) Anmeldenummer: **89118727.0**

(22) Anmeldetag: **09.10.89**

(54) **Schaltungsanordnung für einen optoelektronischen Positionssensor.**

(43) Veröffentlichungstag der Anmeldung:
**17.04.91 Patentblatt 91/16**

(45) Bekanntmachung des Hinweises auf die
Patenterteilung:
**20.04.94 Patentblatt 94/16**

(84) Benannte Vertragsstaaten:
**DE ES FR GB IT**

(56) Entgegenhaltungen:
**EP-A- 0 263 261**
**DE-A- 2 311 676**
**DE-A- 3 709 614**
**DE-C- 3 720 294**

(73) Patentinhaber: **LITEF GmbH**
**Lörracher Strasse 18**
**D-79115 Freiburg(DE)**

(72) Erfinder: **Flamm, Jürgen, Dipl.-Ing.**
**Burgstrasse 19**
**D-7836 Bahlingen(DE)**

(74) Vertreter: **TER MEER - MÜLLER - STEINMEI-**
**STER & PARTNER**
**Mauerkircherstrasse 45**
**D-81679 München (DE)**

EP 0 422 259 B1

## Beschreibung

Die Erfindung betrifft eine Schaltungsanordnung für einen optoelektronischen Positionssensor nach dem Oberbegriff des Patentanspruchs 1.

Ausgangspunkt für die Erfindung bildet der in der Druckschrift DE 37 20 294 C1 beschriebene optoelektronische Positionssensor, dessen Funktions- und Schaltungsanordnung in der beigefügten Fig. 1 dargestellt ist. Auf die erwähnte Druckschrift wird voll inhaltlich Bezug genommen. Anordnungen optoelektronischer Positionierungsabgriffe der in der genannten Druckschrift beschriebenen Art sind umfänglich benutzt und eingesetzt worden, insbesondere in Kreiselgeräten und/oder Beschleunigungsmeßgeräten.

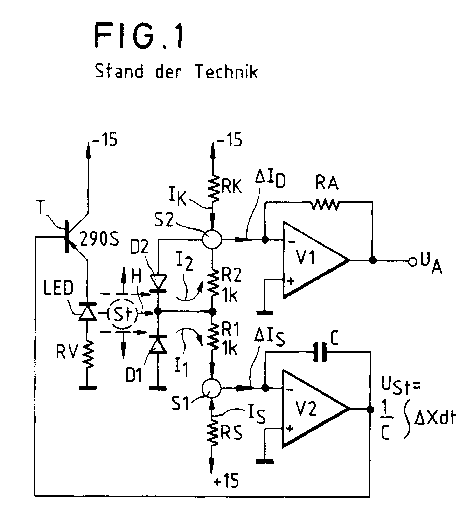

Die Funktion des Schaltbilds nach Fig. 1 wird nachfolgend unter weitgehend wörtlicher Übernahme der Beschreibung in Spalte 2 ab Zeile 30, bis Spalte 3, Zeile 10 der genannten DE-Druckschrift erläutert.

Die Schaltung nach Fig. 1 enthält zwei lichtempfindliche Dioden D1, D2, die mit geringem Abstand insbesondere von ca. 25 $\mu$m, vorzugsweise auf einem Chip integriert sind und durch einen steuerbaren Lichtstrom beaufschlagt werden, der von einer Lichtquelle, insbesondere eine lichtemittierenden Diode LED erzeugt wird. Unter der Wirkung des Lichtstroms liefern die beiden Dioden die entgegengerichteten Ströme I1 und I2, die über Arbeitswiderstände R1, R2 fließen. Der Strom I1 hängt von der Helligkeit H des von der Lichtquelle LED emittierten Lichtstroms ab. An einem Summenpunkt S1 wird der Strom I1 mit einem konstanten Strom $I_S$ verglichen. Eine sich ergebende Stromdifferenz $\Delta I_S = I_S$-I1 beaufschlagt einen Integrationsverstärker V2, der die Steuerspannung $U_{St} = 1/C \int \Delta I_S dt$ erzeugt. Über einen Transistor T wird damit die Helligkeit H des Lichtstroms so nachgeregelt, daß $I_1 = I_S$ wird.

Ist am Summenpunkt S1 der Strom $I_1$ kleiner als $I_S$, so wird die Steuerspannung $U_{St}$ am Integrationsverstärker V2 negativ ansteigen und die Helligkeit H des Lichtstroms so weit zunehmen, bis $I_1 = I_S$ wird. Am Summenpunkt S1 wird sich also immer ein Gleichgewichtszustand einstellen, unabhängig von der Temperatur, der Exemplarstreuung oder anderen Unsymmetrien, d. h. es gilt $I_1 = I_S = $ konstant.

Da die in Differenzanordnung geschalteten Dioden D1 und D2 in der Regel auf einem Chip integriert sind und somit auch identische Eigenschaften aufweisen, wird $I_2 = I_1$ sein. An einem weiteren Summenpunkt $S_2$ wird die Differenz $\Delta I_D = I_2$ -$I_k$ gebildet, die bei gleichmäßiger Bestrahlung der Dioden D1, D2 zu Null kompensiert wird. Da kein Strom $\Delta I_D$ fließt, wird auch die Ausgangsspannung $U_A = \Delta I_D \cdot R_A$ gleich Null sein.

Befindet sich im Lichtstrom H, also zwischen der Lichtquelle LED und den Dioden D1, D2 ein abschattendes Element, z. B. ein sogenannter Schattenstab St, der symmetrisch einen Teil der Lichtempfängerflächen der Dioden D1 und D2 abdeckt, so wird trotz der geringer werdenden aktiven Diodenflächen der Strom $I_1$ und $I_2$ konstant bleiben, da eine höhere Helligkeit H über den Integrationsverstärker V2 nachgeregelt wird.

Wird nun das abschattende Element, beispielsweise der Schattenstab St ausgelenkt, so wird die aktive Fläche der Diode D1 verkleinert und die der Diode D2 vergrößert bzw. umgekehrt. Am Summenpunkt S2 entsteht also die Stromdifferenz $\Delta I_D = I_2 - I_k$, die über einen Widerstand $R_A$ des stromspannungswandelnden Verstärkers V1 die Ausgangsspannung $U_A$ erzeugt. $I_1$ wird nach wie vor konstantgehalten, d. h. es gilt weiterhin $I_1 = I_S = $ konstant.

Mit Hilfe der bekannten regelnden Schaltungsanordnung ist es möglich, Temperatureinflüsse, Exemplarstreuungen sowie Fertigungstoleranzen im Positionssensor weitgehend zu eliminieren. Die bekannte Schaltungsanordnung gemäß Fig. 1 hat jedoch einige Schwachpunkte, die einerseits prinzipieller Art sind und andererseits aufgrund der schaltungstechnischen Realisierung zu Fehlereinflüssen führen. Es handelt sich im wesentlichen um drei in der Praxis wesentliche Schwachpunkte, die nachfolgend aufgeführt sind:

- Bei der bekannten Schaltungsanordnung nach Fig. 1 wird zur Gewinnung der zum Schattenstab St positionsproportionalen Spannung $U_A$ nur das Signal der Diode D2 ausgewertet; das Signal der Diode D1 bleibt unberücksichtigt. Es wird also lediglich die halbe Empfindlichkeit des optischen Positionsabgriffs ausgenutzt.

- Die Rückwirkungen des Strom-Spannungs-Wandlers mit Verstärker V2 auf die Ausgangsspannung $U_A$ bleiben unberücksichtigt. Die Offset-Spannung und Offset-Spannungsdrift des realen Verstärkers V2 verfälschen jedoch die Ausgangsspannung $U_A$ und führen zu Nullpunktfehlern und zu Nullpunkt-Fehlerdrift. Dies läßt sich durch folgende Überlegungen verifizieren: Die Verkopplung des Verstärkers V2 erfolgt über die Widerstände R1 und R2 (siehe Fig. 1) mit einer Verstärkung entsprechend dem Verhältnis von $-R_A/-(R1+R2)$. Da zur Erzielung eines hohen Spannungsgradienten von $U_A$, $R_A >> (R1+R2)$ gelten muß, kann dieser Fehlereinfluß beträchtlich sein. Der Einsatz dieser bekannten Schaltung z. B. in hochgenauen Kreiselgeräten und/oder Beschleunigungsmeßgeräten ist damit nicht möglich bzw. stark eingeschränkt.

- Die Arbeitswiderstände R1 und R2 (vgl. Fig. 1) belasten die Dioden D1 und D2. Da nur der Kurzschlußstrom einer Photodiode streng proportional zur Beleuchtungsstärke H ist, müssen zur Erzielung bester Linearität die Arbeitswiderstände R1 und R2 gleich Null sein. Die bekannte Schaltung nach Fig. 1 ist mit dieser Bedingung nicht funktionsfähig, so daß eine reine Kurzschlußstrommessung nicht erreicht werden kann, da $R_1 = R_2 =$ Null eine unendlich große Fehlerkopplung vom Verstärker V2 auf die Ausgangsspannung $U_A \cdot (-R_A/(R_1 + R_2) \rightarrow \infty$ für $(R_1 + R_2) \rightarrow 0$ bedeuten würde.

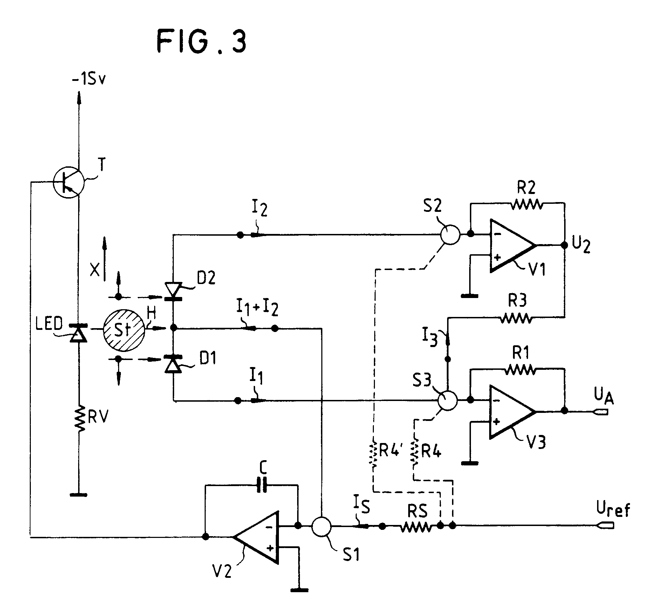

Bei dem optoelektronischen Positionssensor gemäß DE-A-3 509 915 ist den beiden Anodenanschlüßen der kathodenseitig verbundenen Dioden jeweils ein Strom/Spannungswandler zugeschaltet ( Figur 3, so daß die Dioden mit kurzgeschlossenem Ausgang arbeiten. Aus den Ausgängen der beiden Wandler wird ein der Meßgröße entsprechendes Differenzsignal (mittels eines Differenzverstärkers) gewonnen, aber auch ein Summensignal zur Regelung der Lichtstärke über einen regelnden Verstärker. Eine ähnliche Abgriffschaltung ist auch den Dokumenten DE-A-2 311 676 und DE-A-3 636 266) zu entnehmen. Der Differenzverstärker und der regelnde Verstärker sind somit mit einander über Widerstände verkoppelt; dies führt zu den obengenannten Rückwirkungsfehlereinflüssen.

Der Erfindung liegt damit die Aufgabe zugrunde, eine Schaltungsanordnung für einen optoelektronischen Positionierungsabgriff gemäß dem Oberbegriff des Patentanspruchs 1, wie sie oben unter Bezug auf die Fig. 1 erläutert wurde, so zu verbessern, daß eine höhere Empfindlichkeit erreicht wird, eine strenge Proportionalität zwischen der jeweiligen Beleuchtungsstärke und dem Ausgangssignal gewährleistet und insbesondere Nullpunktfehlerdriften ausgeschlossen werden Können.

Eine Schaltungsanordnung für einen optoelektronischen Positionierungsabgriff, bei dem ein Lichtstrahl oder Lichtbündel einer Lichtquelle zwei nebeneinander angeordnete, kathodenseitig verbundene lichtempfindliche Dioden bestrahlt, bei dem ein senkrecht zum Strahlengang bewegliches Element den Lichtstrahl teilweise abschattet, bei dem ein zur Differenz der Diodenströme proportionales und die Lage des abschattenden Elements im Lichtstrahl charakterisierendes Signal erzeugt wird, das aus den Ausgangssignalen zweier Strom-Spannungswandlerstufen gewonnen wird, die eingangsseitig durch jeweils einen zugeordneten der Diodenströme beaufschlagt sind, und bei dem weiterhin der Strom der Lichtquelle über ein Verstärkerelement vorgegeben wird, dessen Arbeitspunkt über einen auf ein Festpotential bezogen, als Integrationsverstärker arbeitenden regelnden Verstärker geregelt wird, dessen zu integrierendes Eingangssignal durch die Differenz eines konstanten Referenzstroms und eines diodenstromabhängigen Stromsignals gebildet ist, besteht die Erfindung darin, daß der gemeinsame Kathodenausgang der beiden Dioden direkt, d.h. galvanisch mit dem Eingang des als Integrationsverstärker geschalteten regelnden Verstärkers verbunden ist.

Der Erfindung liegt also der Gedanke zugrunde, zur Beseitigung der vorgenannten Schaltungsnachteile, nämlich ungenügende Empfindlichkeit, Einflüsse einer Offset-Spannungsdrift und ungenügende Linearität des Ausgangssignals in Abhängigkeit von der Beleuchtungsstärke der Dioden, jede der drei Anschlüsse der Dioden D1 und D2 (zweimal Anode, gemeinsame Kathode) mit Stromspannungswandlerstufen zu beschalten. Der besondere Vorteil dieser Schaltungsauslegung mit Stromspannungswandlerstufen ist deren verschwindender Eingangswiderstand, wodurch eine belastungslose, echte Kurzschlußstrommessung erfolgt und die einzelnen Strom-Summenpunkte S1, S2 und S3 (vgl. nachfolgende Beschreibung der Ausführungsbeispiele) entkoppelt sind.

Als weitere Vorteile können die verdoppelte Empfindlichkeit durch die direkte Erfassung der Ströme (I1 und I2) beider Dioden zur Gewinnung des Ausgangssignals und die direkte Erfassung der Stromsumme (I1 + I2) beider Dioden zur Arbeitspunktregelung angesehen werden.

Der Stand der Technik bietet für das erfindungsgemäße Lösungsprinzip keine Anhaltspunkte.

So wird bei einer vergleichbaren bekannten Schaltungsanordnung (siehe Aufsatz Y. Netzer, "Linear light polarizers sense angular position" in Electronics, Oktober 12, 1978, Seite 146 bis 148), bei der als abschattendes Element ein beweglicher Polarisierer verwendet wird, ebenfalls nur der Strom einer Diode zur Erzeugung des Positionssignals ausgenutzt. Eine Kurzschlußstrommessung bei direkter Erfassung der Summenströme zur Regelung des Arbeitspunkts ist ebenso wenig vorgesehen wie bei der Schaltung nach Fig. 1. Außerdem ist auch dort eine Verkopplung zwischen dem Signalpfad und dem Arbeitspunktregler gegeben.

Bei dem optoelektronischen Wegaufnehmer gemäß EP-A-0 263 261 wird das Ausgangssignal $U_A$ zwar aus der Differenz zweier Einzelspannungen bestimmt, die über zwei eingangsseitig durch jeweils einen der Diodenströme direkt beaufschlagte Strom-Spannungswandler gewonnen werden. Es wird jedoch trotz erheblichen Schaltungsaufwands teilweise nur eine Diode zur Signalgewinnung ausgenützt und der Arbeitspunkt der Lichtquelle wird nicht aus der direkt an der gemeinsamen Kathode abgegriffenen Summe der die Dioden durchfließenden Ströme bestimmt. Entsprechendes gilt für die für ähnliche Zwecke bestimmten Schaltungsanordnungen mit jeweils anderer Art der abschattenden Elemente gemäß den Druckschriften DE-A-26 06 434 oder DE-A-37 09 614.

Zwei Ausführungsbeispiele der Erfindung werden nachfolgend unter Bezug auf die Zeichnung näher erläutert. Es zeigen:

Fig. 1    die bereits beschriebene Schaltungsanordnung für einen optoelektronischen Positionsabgriff nach dem Stand der Technik gemäß DE-A-37 20 294;

Fig. 2    ein erstes Ausführungsbeispiel einer erfindungsgemäßen Schaltungsanordnung, bei der die Summe beider Diodenströme zur Arbeitspunktregelung ausgenutzt und das Ausgangssignal als Differenz zweier diodenstromproportionaler Spannungen bestimmt wird; und

Fig. 3    eine abgewandelte Ausführungsform einer erfindungsgemäßen Schaltungsanordnung, bei der entsprechend Fig. 2 ebenfalls die Summe der Diodenströme zur Arbeitspunktregelung dient, das Ausgangssignal jedoch unmittelbar durch Differenzbildung zweier Ströme am Eingang eines der mit einer der Anoden der Dioden gekoppelten Strom-Spannungswandler gebildet wird.

Die aus Fig. 1 bereits bekannten Bauelemente und Schaltungspunkte sind zu Zwecken des besseren Vergleichs mit den gleichen Bezugshinweisen gekennzeichnet.

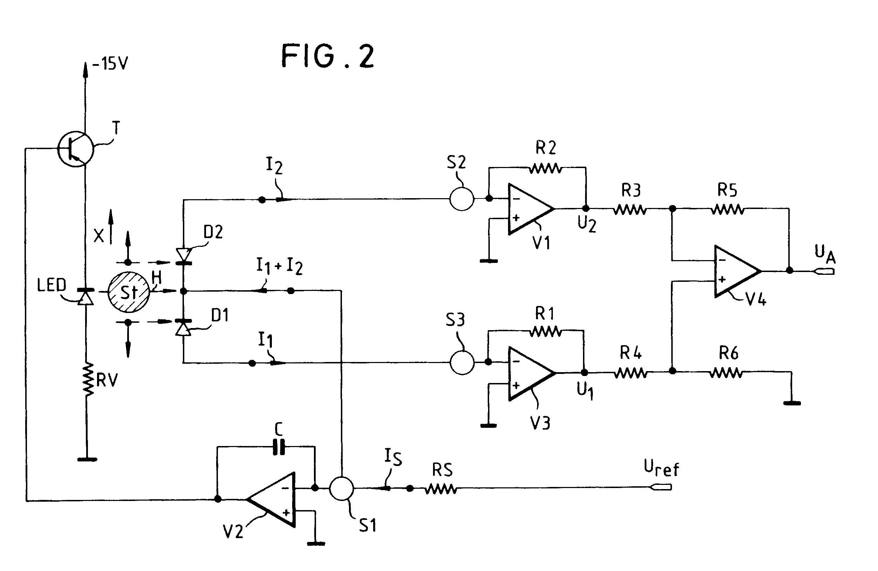

In beiden Fällen der Schaltungen nach Fig. 2 bzw. 3 ist die direkte Erfassung der Summe beider Diodenströme an der gemeinsamen Kathode, d. h. $I_S = (I_1 + I_2)$ zur Arbeitspunktregelung verwirklicht. Da sich die Diodenströme $I_1$ und $I_2$ bei einer Bewegung des Schattenstabs St gegensinnig verändern, ist die Summe $(I_1 + I_2)$ unabhängig von der Bewegung des Schattenstabs St gleich dem vorgegebenen konstanten Arbeitspunktstrom $I_S$.

Gemäß der Lehre der Erfindung sind bei beiden Ausführungsformen nach den Fig. 2 und 3 die Anoden der Dioden D1 bzw. D2 direkt, d. h., nicht wie bei der Ausführungsform nach Fig. 1 über Arbeitswiderstände auf jeweils einen Strom-Spannungswandler geschaltet. Andererseits sind die verbundenen Kathoden der Dioden D1 und D2 unmittelbar auf den Regelsignaleingang des ebenfalls strom-spannungswandelnden Integrationsverstärkers geschaltet, der ganz analog zur Ausführungsform nach Fig. 1 über einen Widerstand RS außerdem an eine Bezugsspannungsquelle $U_{ref}$ angeschlossen ist, von der aus der konstant vorgegebene Arbeitsstrom $I_S$ eingespeist wird.

Bei der Ausführungsform nach Fig. 2 wird in an sich bekannter Weise (vgl. beispielsweise DE-A-23 11 676 und DE-A-35 09 915) die Ausgangsspannung $U_A$ als Spannungsdifferenz der den Strömen $I_1$ bzw. $I_2$ proportionalen Spannungen $U_1$ und $U_2$ gebildet.

Im Gegensatz dazu wird bei der Ausführungsform einer erfindungsgemäßen Schaltungsanordnung nach Fig. 3 die Ausgangsspannung $U_A$ durch Differenzbildung der Ströme $I_1$ und $I_3$ direkt am Eingang des mit der Anode der Diode D1 verbundenen Strom-Spannungswandlers mit dem Verstärkerbaustein V3 gewonnen. Hierbei liefert also die Stromdifferenz $(I_1 - I_3)$ über den Widerstand R1 die Ausgangsspannung $U_A$. Die Kennlinienteilheit der linearen Ausgangsspannung $U_A$ ist mit dem Widerstand R1 einstellbar. Eine Konfiguration, bei der die Stromdifferenz am Eingang des mit der Anode der Diode D2 verbundenen Strom-Spannungswandlers mit Verstärkerbaustein V1 gebildet wird, ist der in Fig. 3 dargestellten Anordnung äquivalent bis auf eine Vorzeichenumkehr bei unveränderter Diodenbeschaltung.

Durch die Auswertung der beiden Diodenströme $I_1$ und $I_2$ zur Bildung von $U_A$ ist bei den Schaltungen nach Fig. 2 bzw. Fig. 3 die volle Empfindlichkeit der Opto-Elektronik ausgenutzt.

Während die Bildung der Ausgangsspannung $U_A$ bei der Schaltung nach Fig. 2 als Differenz der Spannungen $(U_2 - U_1)$ für den Fachmann unmittelbar ersichtlich, sei im folgenden für die Schaltung nach Fig. 3 ein rechnerischer Nachweis erbracht. Für diese Schaltung nach Fig. 3 gilt:

$$U_2 = - I_2 R_2 \qquad (1)$$

$$I_3 = - U_2/R_3 = I_2 R2/R3 \qquad (2)$$

$$U_A = - (I_1 - I_3) \cdot R_1 = R_1 (R2/R3 \; I_2 - I_1) \qquad (3)$$

$$I_1 + I_2 = I_S \qquad (4)$$

Die Bedingung der Gleichung (4) ergibt sich entsprechend der in DE 37 20 294 C1 beschriebenen Arbeitsweise des Arbeitspunktregelkreises.

Bei Bewegung des Schattenstabs St um eine Strecke $\Delta X$ ändern sich die Diodenströme $I_1$ und $I_2$ proportional zu $\Delta X$ um $\Delta$. Vom Nullpunkt $(\Delta X = 0)$ ausgehend nimmt je nach Bewegungsrichtung $I_1$ zu und $I_2$ ab oder umgekehrt.

Für $I_1$ und $I_2$ gilt:

$$I_1 = I_{10} (1 - \Delta) \qquad (5)$$

$$I_2 = I_{20} (1 + \Delta) \qquad (6)$$

$I_{10}$ und $I_{20}$ sind die Diodenströme für $\Delta X = 0$ (siehe Gleichung (8) und Gleichung (9)). Die Sum-

me von $I_1$ und $I_2$ wird

$$I_1 + I_2 = I_{10} + I_{20} + \Delta (I_{20} - I_{10}) \qquad (7)$$

und ist für $I_{10} = I_{20}$ unabhängig von der Bewegung des Schattenstabs St.

Aufgrund der Symmetrie der optischen Anordnung ist $I_{10} = I_{20}$ stets erfüllt.

Mit Gleichung (4) erhält man:

$$I_{10} = I_{S/2} \qquad (8)$$

$$I_{20} = I_{S/2} \qquad (9)$$

Setzt man Gleichung (5) und Gleichung (6) in Gleichung (3) ein, folgt:

$$U_A = R_1 (R2/R3 \, I_{20} (1 + \Delta) - I_{10} (1 - \Delta) \qquad (10)$$

$$U_A = R1 (R2/R3 \, I_{20} - I_{10}) + R_1 (R2/R3 \, I_{20} + I_{10})\text{-}\Delta \qquad (11)$$

und mit Gleichung (8) und Gleichung (9) gilt weiter:

$$U_A = R_1 (R2/R3 - 1) I_{S/2} + R_1 \, I_S/2 (R2/R3 + 1)\text{-}\Delta \qquad (12)$$

Mit

$$R2/R3 = 1 \qquad (13)$$

gilt schließlich für $U_A$

$$U_A = R_1 \, I_S \, \Delta \qquad (14)$$

Zum Abgleich dieser Schaltung wird ganz analog wie für die Schaltung nach Fig. 1 vorgegangen (vgl. Spalte 4 ab Zeile 25 DE-A-37 20 294).

Eine geringe Ablagespannung am Ausgang des Verstärkers V3 des zwischen dem Ausgang $U_2$ und dem Nutzsignaleingang des Verstärkers V3 liegenden Widerstands wird ohne Zusatzwiderstand mittels des Widerstands R2 oder R3 korrigiert. Mit einem zusätzlichen Widerstand R4 bzw. R4' kann alternativ ein Korrekturstrom von der Referenzspannungsquelle am Summenpunkt S3 oder S2 eingespeist werden. Damit ist auf einfache Weise ein bipolarer Abgleich unter Verwendung der zur stabilen Arbeitspunkteinstellung erforderlichen Referenzspannung $U_{ref}$ möglich.

Diese zweite Abgleichmöglichkeit kann auch bei der Schaltung nach Fig. 2 angewendet werden.

Die gewünschte Steilheit der Ausgangsspannung $U_A$ wird mit dem Widerstand R1 eingestellt. Eine zweite Möglichkeit besteht darin, mittels der Referenzspannung $U_{ref}$ oder dem Widerstand $R_S$ den Arbeitsstrom $I_S$ zur Steilheitseinstellung zu benutzen. Diese Art des Abgleichs wird bei der Schaltung nach Fig. 2 eingesetzt.

Beide Schaltungsausführungen sind damit sehr einfach abgleichbar und nutzen die volle Empfindlichkeit des optischen Teils durch Auswertung beider Diodenströme aus, entkoppeln den Signalpfad zur Gewinnung der Ausgangsspannung $U_A$ vom Arbeitspunktregler und ermöglichen eine echte Kurzschlußstrommessung. Dadurch wird eine Linearitätsverbesserung erreicht. Die Arbeitspunktregelung erfolgt durch die von der Position des Schattenstabs St unabhängigen Summe $(I_1 + I_2)$ der beiden Diodenströme.

Bei Einsatz von auf dem Markt erhältlichen, z. B. monolithischen Vierfachverstärkern, besteht bei der Schaltung nach Fig. 2 gegenüber der Schaltung nach Fig. 1 ein realer Mehraufwand von lediglich drei Widerständen, während die Schaltung nach Fig. 3 ohne jeglichen realen Mehraufwand auskommt.

**Patentansprüche**

1. Schaltungsanordnung für einen optoelektronischen Positionssensor, bei dem
   - der Lichtstrahl einer Lichtquelle (LED) zwei nebeneinander angeordnete, kathodenseitig verbundene lichtempfindliche Dioden (D1, D2) bestrahlt,
   - ein senkrecht zum Strahlengang bewegliches Element (St) den Lichtstrahl (H) teilweise abschattet, wobei die Schaltungsanordnung so ausgebildet ist, daß
   - ein zur Differenz der Diodenströme ($I_1$, $I_2$) proportionales und die Lage des abschattenden Elements (St) Im Lichtstrahl (H) charakterisierendes Signal erzeugt wird, das aus den Ausgangssignalen zweier Strom-Spannungswandlerstufen ($V_1$, $V_3$) gewonnen wird, die eingangsseitig durch jeweils einen zugeordneten der Diodenströme ($I_1$, $I_2$) beaufschlagt sind, und bei dem
   - der Strom der Lichtquelle (LED) über ein Verstärkerelement (T) vorgegeben wird, dessen Arbeitspunkt über einen auf ein Festpotential bezogenen, als Integrationsverstärker arbeitenden regelnden Verstärker (V2) geregelt wird, dessen zu integrierendes Eingangssignal durch die Differenz eines konstanten Referenzstroms ($I_S$) und eines diodenstromabhängigen Stromsignals gebildet ist,
   **dadurch gekennzeichnet**, daß der gemeinsame Kathodenausgang der beiden Dioden (D1, D2) direkt (galvanisch) mit dem Eingang des als Integrationsverstärker geschalteten regelnden Verstärkers (V2) verbunden ist.

**2.** Schaltungsanordnung nach Anspruch 1, bei der das Ausgangssignal ($U_A$) an einem der mit den Anoden der Dioden direkt verbundenen Strom-Spannungswandler (V1 bzw. V3) ausgangsseitig abgreifbar ist, dadurch gekennzeichnet, daß das Eingangssignal dieses Strom-Spannungswandlers (z. B. V3) durch die Differenz des Stroms durch die anodenseitig mit diesem Strom-Spannungswandler verbundenen Diode ($I_1$ bzw. $I_2$) und des Ausgangsstroms ($I_3$) des mit der Anode der anderen Diode direkt verbundenen Strom-Spannungswandlers (z. B. V1) gebildet ist.

**3.** Schaltungsanordnung nach Anspruch 2, dadurch gekennzeichnet, daß die Kennliniensteilheit der Ausgangsspannung ($U_A$) durch einen vom Ausgang des die Ausgangsspannung liefernden Stromspannungswandlers zu dessen Stromsignaleingang geschalteten Widerstand (R1) einstellbar ist.

**4.** Schaltungsanordnung nach Anspruch 3, dadurch gekennzeichnet, daß der bipolare Abgleich der mit den Anoden der Dioden (D1, D2) verbundenen Strom-Spannungswandler durch einen Einstellwiderstand (R3) im Strompfad des zur Differenzbildung verwendeten Ausgangsstroms ($I_3$) erfolgt.

**5.** Schaltungsanordnung nach Anspruch 3, dadurch gekennzeichnet, daß der bipolare Abgleich der mit den Anoden der Dioden (D1, D2) verbundenen Strom-Spannungswandler durch einen Einstellwiderstand (R2), geschaltet vom Ausgang des mit der Anode der einen Diode (D2) verbundenen Strom-Spannungswandlers zu dessen Signaleingang (S2) erfolgt.

**6.** Schaltungsanordnung nach Anspruch 3, dadurch gekennzeichnet, daß der bipolare Abgleich der mit den Anoden der Dioden (D1, D2) verbundenen Strom-Spannungswandler durch einen Einstellwiderstand (R4, R4'), geschaltet von der Referenzspannungsquelle ($U_{ref}$) zum Stromsignaleingang (S2 oder S3) der einen und/oder der anderen Strom-Spannungswandlerstufe (V1 oder V3) erfolgt.

**Claims**

**1.** Circuit arrangement for an optoelectronic position sensor, in which
- the light beam of a light source (LED) irradiates two adjacently arranged light-sensitive diodes (D1, D2) which are connected at the cathode end,

- an element (St), which can be moved perpendicularly to the beam path partially shades the light beam (H), the circuit arrangement being constructed such that,
- a signal which is proportional to the difference of the diode currents ($I_1$, $I_2$) and characterizes the position of the shading element (St) in the light beam (H) is generated, which signal is obtained from the output signals of two current/voltage converter stages ($V_1$, $V_3$), to which an associated one of the diode currents ($I_1$, $I_2$) is respectively applied at the input end and in which
- the current of the light source (LED) is predetermined via an amplifier element (T), the operating point of which is controlled via a controlling amplifier (V2) operating as an integrating amplifier (V2) referred to a fixed potential and the input signal of which to be integrated is formed by the difference of a constant reference current ($I_S$) and a diode-current-dependent current signal, characterized in that the cathode output common to both diodes (D1, D2) is connected directly (galvanically) to the input of the controlling amplifier ($V_2$) connected as an integrating amplifier.

**2.** Circuit arrangement according to Claim 1, in which the output signal ($U_A$) can be picked up at the output end of a current/voltage converter (V1 or V3) which is directly connected to the anodes of the diodes, wherein the input signal of this current/voltage converter (for example V3) is formed by the difference of the current through the diode connected to this current/voltage converter at the anode end ($I_1$ or $I_2$) and the output current ($I_3$) of the current/voltage converter (for example V1) directly connected to the anode of the other diode.

**3.** Circuit arrangement according to Claim 2, characterized in that the slope of the characteristic of the output voltage ($U_A$) can be adjusted by a resistor (R1) which is connected from the output of the current/voltage converter supplying the output voltage to its current signal input.

**4.** Circuit arrangement according to Claim 3, wherein the bipolar calibration of the current/voltage converter connected to the anodes of the diodes (D1, D2) is effected by an adjusting resistor (R3) in the current path of the output current ($I_3$) used for forming the difference.

5. Circuit arrangement according to Claim 3, wherein the bipolar calibration of the current/voltage converter connected to the anodes of the diodes (D1, D2) is effected by an adjusting resistor (R2) connected from the output of the current/voltage converter connected to the anode of the one diode (D2) to its signal input (S2).

6. Circuit arrangement according to Claim 3, wherein the bipolar calibration of the current/voltage converter connected to the anodes of the diodes (D1, D2) is effected by an adjusting resistor (R4, R4'), connected from the reference voltage source ($U_{ref}$) to the current signal input (S2 or S3) of one and/or the other current/voltage converter stage (V1 or V3).

**Revendications**

1. Dispositif de commutation pour un capteur de position optoélectronique dans lequel
   - le faisceau lumineux d'une source de lumière (LED) frappe deux diodes (D1, D2) disposées côte à côte et reliées du côté cathode,
   - un élément (St) perpendiculairement mobile par rapport à la marche des rayons masque partiellement le faisceau lumineux (H), le dispositif de commutation étant réalisé de façon à
   - produire un signal proportionnel à la différence des courants de diode ($I_1$-$I_2$) et caractérisant la position de l'élément de masquage (St) dans le faisceau lumineux (H), qui est obtenu à partir des signaux de sortie de deux étages convertisseurs courant-tension ($V_2$, $V_3$) alimentés du côté entrée par respectivement l'un des courants de diode ($I_1$, $I_2$) associé, et dans lequel
   - le courant de la source de lumière (LED) est prédéterminé par l'intermédiaire d'un élément amplificateur (T) dont le point de fonctionnement est déterminé par un amplificateur de réglage ($V_2$) par rapport à un potentiel fixe et fonctionnant comme amplificateur d'intégration dont le signal d'entrée à intégrer est formé par la différence entre un courant de référence ($I_S$) constant et un signal de courant qui est fonction du courant de diode, caractérisé en ce que la sortie de cathode commune des deux diodes (D1, D2) est reliée directement (connexion galvanique) à l'entrée de l'amplificateur de réglage ($V_2$) monté en amplificateur d'intégration.

2. Dispositif de commutation selon la revendication 1, dans lequel le signal de sortie ($U_A$) peut être prélevé à la sortie d'un convertisseur courant-tension (V1 et respectivement V3) directement relié aux anodes des diodes, caractérisé en ce que le signal d'entrée dudit convertisseur courant-tension (par exemple V3) est formé par la différence entre le courant passant par la diode ($I_1$ et respectivement $I_2$) dont l'anode est reliée audit convertisseur courant-tension et le courant de sortie ($I_3$) du convertisseur courant-tension (par exemple V1) relié directement à l'anode de l'autre diode.

3. Dispositif de commutation selon la revendication 2, caractérisé en ce que la pente de la courbe caractéristique de la tension de sortie ($U_A$) peut être réglée par une résistance (R1) intercalée entre la sortie du convertisseur courant-tension fournissant la tension de sortie et l'entrée de signal de courant de ce dernier.

4. Dispositif de commutation selon la revendication 3, caractérisé en ce que le réglage bipolaire des convertisseurs courant-tension reliés aux anodes des diodes (D1, D2) est réalisé par la résistance de réglage (R3) intercalée dans le trajet du courant de sortie ($I_3$) utilisé pour la formation de la différence.

5. Dispositif de commutation selon la revendication 3, caractérisé en ce que le réglage bipolaire des convertisseurs courant-tension reliés aux anodes des diodes (D1, D2) est réalisé par une résistance de réglage (R2) intercalée entre la sortie du convertisseur courant-tension relié à l'anode de l'une des diodes (D2) et l'entrée de signal (S2) dudit convertisseur courant-tension.

6. Dispositif de commutation selon la revendication 3, caractérisé en ce que le réglage bipolaire des convertisseurs courant-tension reliés aux anodes des diodes (D1, D2) est réalisé par une résistance de réglage (R4, R4') intercalée entre la source de tension de référence ($U_{ref}$) et l'entrée de signal de courant (S2 ou S3) de l'un et/ou de l'autre desdits étages convertisseurs courant-tension (V1 ou V3).

# FIG.1

Stand der Technik

FIG. 2

EP 0 422 259 B1

# FIG.3